# EUROPÄISCHE PATENTSCHRIFT

(11) **EP 2 126 644 B1**
(45) Veröffentlichungstag und Bekanntmachung des Hinweises auf die Patenterteilung: **06.07.2011**
(21) Anmeldenummer: 08716928.0
(22) Anmeldetag: 19.02.2008
(51) Int. Cl.: G05B 19/05

(54) **VERFAHREN ZUR UMWANDLUNG VON KONTAKTPLÄNEN**
METHOD FOR THE CONVERSION OF LADDER DIAGRAMS
Procédé de transformation de schéma à contacts

(30) Priorität: 19.02.2007 DE 102007008451
(43) Veröffentlichungstag der Anmeldung: 02.12.2009
(73) Patentinhaber: SCHNEIDER ELECTRIC AUTOMATION GMBH, 63500 Seligenstadt (DE)
(72) Erfinder: SCHMIDT, Andreas, 63069 Offenbach (DE)
(74) Vertreter: Stoffregen, Hans-Herbert
(86) Internationale Anmeldenummer: PCT/EP2008/051976
(87) Internationale Veröffentlichungsnummer: WO 2008/101916

(56) Entgegenhaltungen:
- SCHNEIDER ELECTRIC: "Automatisieren mit Quantum"[Online] März 2003 (2003-03), XP002488962 Ratingen DE Gefunden im Internet: URL:http://www.schneider-electric.de/uploa d/FileManager/cat/pdf/aut/zxkquantum_2003. pdf> [gefunden am 2008-07-18]

## Beschreibung

Die Erfindung bezieht sich auf ein Verfahren zur Umwandlung von traditionellen, spaltenweise gelesenen und ausgeführten Kontaktplanen für speicheiprogrammierbare Steuerungen nach dem 984 - Modell in Kontäktpläne für Steuerungen nach IEC 61131.

In der Veröffentlichung "Aatomatisieren mit Quantum" [Online], März 2003, Schneider Etectric GmbH, Ratingen, sind Kontaktpläne beschrieben, die herkömmliche Schutzsteuerungen für Speicher-programmierbare Steuerungen modellieren. Sie sind zellenweise gegliedert und setzen sich aus verschiedenen Kontakten, Spulen, horizontalen und vertikalen Verbindungen. Funktionsblöcken und Stromversorgungs-Simulation zusammen.

Im Gegensatz zu den Schützsteuerungen, bei denen die Werte aller Elemente parallel (gleichzeitig) ermittelt werden, arbeiten speicherprogrammierbare Steuerungen die Werte aller Element nacheinander (sequentiell) ab.

Damit tritt die Abarbeitungsreihenfolge als neues, die Funktion bestimmendes Kriterium hinzu. Meistens sind Kontaktpläne zusätzlich in Netzwerke gegliedert, die nachfolgend für sich als eigener Kontaktplan betrachtet werden.

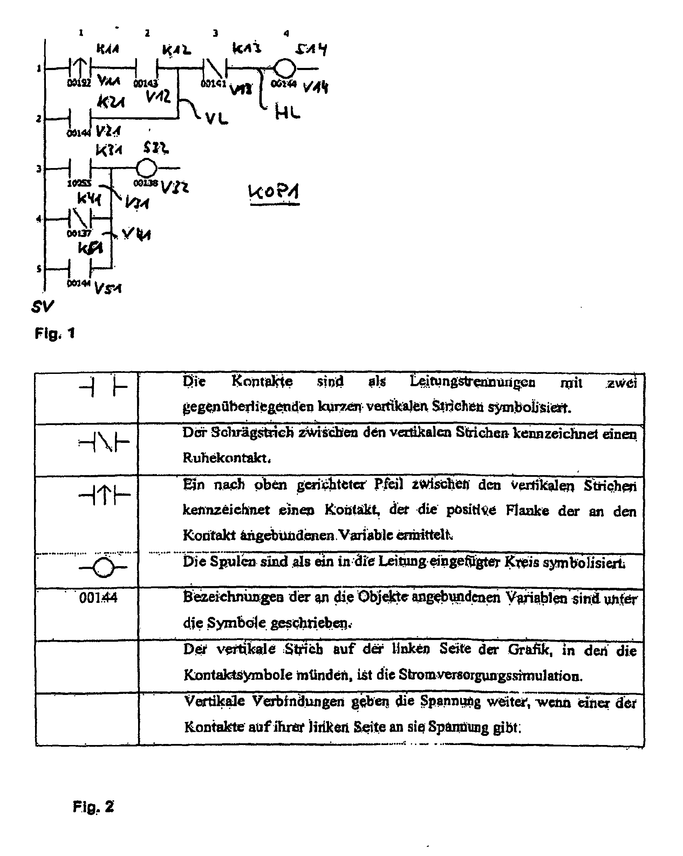

Ein Beispiel eines Kontaktplans KOP1 ist in Fig. 1 dargestellt. Der Kontaktplan KOP ist eine Methode zur Programmierung von speicherprogrammierbaren Steuerungen. Dabei handelt es sich um eine genormte grafische Sprache, die in ihrer Darstellung an Stromlaufpläne angelehnt ist. Ausgehend von einer simulierten Stromversorgung SV werden Objekte wie Kontakte Kxy sowie Spulen Sxy bezeichnet. Jedem Objekt ist eine Variable Vxy zugeordnet mit 1 ≤ x, y ≤ n. Sind die Objekte über Verbindungslinien in Reihe geschaltet, so bedeutet dies eine UND-Verknupfung. Die Objekte einer Reihenschaltung sind in einzelnen Spalten angeordnet. Durch die Anordnung von Objekten in mehreren Reihen, im dargestellten Kontaktplan Reihen 1 bis 5, wird eine ODER-Verknüpfung dargestellt. Horizontale Linien dienen der Verbindung der Objekte. Vertikale Linien VL dienen der Verbindung von horizontalen Linien HL, damit Verzweigungen gebildet werden können. Dabei wird ein links anstehender Wert zu den rechts angeschlossenen Objekten weitergegeben.

Die Spule S14 in Fig. 1 wird beispielsweise über den Kontakt K12 angesteuert und geht über den Kontakt K21 in Selbsthaltung. Ferner wird über den Kontakt K51 die Spule S32 eingeschaltet.

Die Erläuterung der einzelnen Objekte ist der Tabelle gemäß Fig. 2 zu entnehmen.

Daneben können in Kontaktplänen Bausteine auftreten, die sich wie vertikale Verbindungen über mehrere Reihen erstrecken und so mehrere Eingänge und Ausgänge haben können. Sie können bei dem hier beschriebenen Verfahren wie vertikale Verbindungen bearbeitet werden und werden deshalb nicht weiter beschrieben.

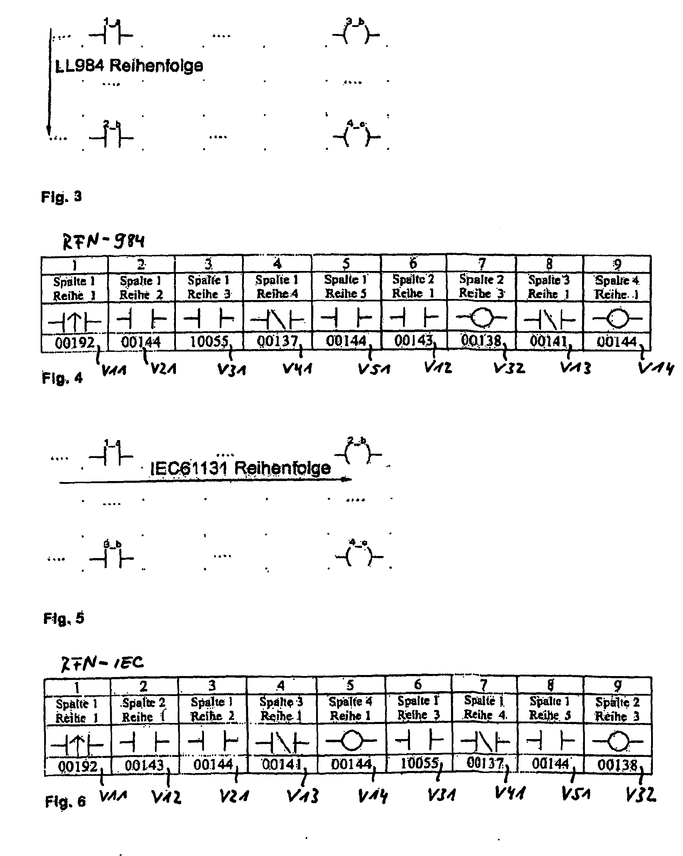

Kontaktpläne für speicherprogrammierbare Steuerungen nach dem 984-Modell, wie beispielhaft in Fig. 3 dargestellt, werden Zelle für Zelle spaltenweise von oben nach unten und dann Spalte für Spalte von links nach rechts gelesen und ausgeführt.

Die Objekte im Beispiel werden in speicherprogrammierbaren Steuerungen, die in der 984-Technik ausgeführt sind, in der in Fig. 4 dargestellten Reihenfolge ausgeführt. Es wird deutlich, dass der neue Wert der selbsthaltenden Spule S14 erst nach der Folgeverarbeitung wirksam wird.

Kontaktpläne gem. Fig. 5 für IEC 61131-orientierte Steuerungen werden Datenflussorientiert gelesen und ausgeführt, d.h. vor Ausführung eines Kontaktplan-Elementes müssen alle Eingangswerte für dieses Element ermittelt worden sein. Wenn alle Eingangswerte für ein Element ermittelt worden sind, wird sofort in horizontaler Richtung fortgeschritten.

Dies wird besonders an den scheinbar einfachen vertikalen Verbindungen wirksam, da der neue Wert aller Elemente auf der linken Seite ermittelt sein muß, bevor der Gesamtwert der vertikalen Verbindung bestimmt wird.

Durch das sofortige Fortschreiten in horizontaler Richtung entsteht der wesentliche Unterschied zwischen den beiden Systemen.

In einem IEC 61131 System ergibt sich für obiges Beispiel die in Fig. 6 dargestellte Ausführungsreihenfolge.

Der neue Wert der selbsthaltenden Spule S14 (Spalte 4, Reihe 1) wird vor der Folgeverarbeitung (Spalte 1, Reihe3 bis Spalte 2, Reihe 3) wirksam.

Das Verhalten ist damit gravierend verschieden von der LL984-Verarbeitung, was zu erheblichen, auch sicherheitsrelevanten Problemen in der Anlagenfunktion führen kann.

Allgemein ausgedrückt: Sind mehrere Funktionblöcke oder Spulen mit an Kontakte rückgeführte Variablen in demselben Kontaktplan enthalten, so kann sich ein gravierend unterschiedliches Verhalten in der ausführenden Steuerung ergeben.

Davon ausgehend liegt der vorliegenden Erfindung das Problem zu Grunde, ein Verfahren der eingangs genannten Art dahingehend weiterzubilden, dass Kontaktpläne für Steuerungen nach 984 - Modell auf Steuerungen nach dem IEC 61131 - Modell ablauffähig sind.

Die Aufgabe wird erfindungsgemäß dadurch gelöst, dass in den traditionell spaltenweise gelesenen und ausgeführten Kontaktplänen ermittelt wird, ob innerhalb des Netzwerkes Variablen sowohl an Spulen als auch an Kontakten vorkommen, dass ermittelt wird, ob der Kontakt nach dem 984-Modell vor der zugeordneten Spule und nach den IEC-Modell nach der zugeordneten Spule verarbeitet wird, dass bejahendenfalls für jede solche Variable eine zusätzliche Variable erzeugt und die zusätzliche Variable statt der originalen Variablen in den betroffenen Kontakt eingetragen wird und dass weiterhin an das Ende des Netzwerkes ein Kontakt mit der originalen Variablen an eine Stromversorgungssimulation angeschlossen wird, gefolgt von einer Spule mit der erzeugten Variablen.

Die Objekte eines Kontaktplans werden zunächst in einer der beiden Reihenfolgen durchnummeriert und die Spulen des Kontaktplans in einer Tabelle mit ihrem Variablennamen als Schlüssel eingetragen.

Nachfolgend werden die Objekte in der anderen Reihenfolge durchlaufen und die Reihenfolgenummer für jedes Objekt ermittelt. Wird ein Kontakt gefunden, wird mit dessen Variablennamen in der Spulentabelle gesucht, ob auch die ihn ansteuernde Spule im Kontaktplan vorhanden ist.

Aus dem Vergleich der Reihenfolgenummern des Kontaktes und der Spule wird abgeleitet, ob für den Kontakt ein Verzögerungselement eingerichtet werden muss.

Für ein Verzögerungselement wird eine zusätzliche Variable erzeugt und die zusätzliche Variable statt der originalen Variablen an den Kontakt angebunden; weiterhin wird an das Ende des Kontaktplanes ein Kontakt mit der originalen Variablen an die Stromversorgungs-simulation angeschlossen, gefolgt von einer Spule mit der erzeugten Variablen.

Eine bevorzugte Verfahrensweise zeichnet sich dadurch aus, dass die Funktionsblöcke eines Kontaktplans mit Hilfe von EN-Eingängen und ENO-Ausgängen gemäß IEC 61131 orientierter Steuerungen in der Reihenfolge der 984-Modellausführung verbunden werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Zeichnungen zu entnehmenden bevorzugten Ausführungsbeispiels.

Es zeigen:
- Fig. 1: einen Kontaktplan nach LL 984,
- Fig. 2: eine Tabelle mit Erläuterungen von in dem Kontaktplan gemäß Fig. 1 verwendeter Symbole,
- Fig.3: eine schematische Darstellung der Abarbeitungsreihenfolge eines Kontaktplans LL 984,
- Fig. 4: eine Tabelle mit der Reihenfolge abgearbeiteter Objekte des Kontaktplans LL 984 gemäß Fig. 1,
- Fig. 5: eine schematische Darstellung der Abarbeitungsreihenfolge eines Kontakplans nach IEC 61131,
- Fig. 6: eine Tabelle mit der Reihenfolge der abzuarbeitenden Objekte des Kontaktplans gemäß Fig. 1 in der IEC 61131 Reihenfolge,
- Fig. 7: eine Darstellung des Verfahrens anhand von Programmschritten,
- Fig. 8: eine schematische Darstellung eines Kontaktplans mit verzögerter Weitergabe,
- Fig. 9: eine Darstellung des aus dem LL984 Kontaktplan gem. Fig. 1 abgeleiteten IEC 61131 Kontaktplans,
- Fig. 10: eine Tabelle mit der Reihenfolge der abzuarbeitenden Objekte des IEC 61131 Kontaktplans gemäß Fig. 9,
- Fig. 11: einen Kontaktplan IEC 61131 mit Funktionsbausteinen.

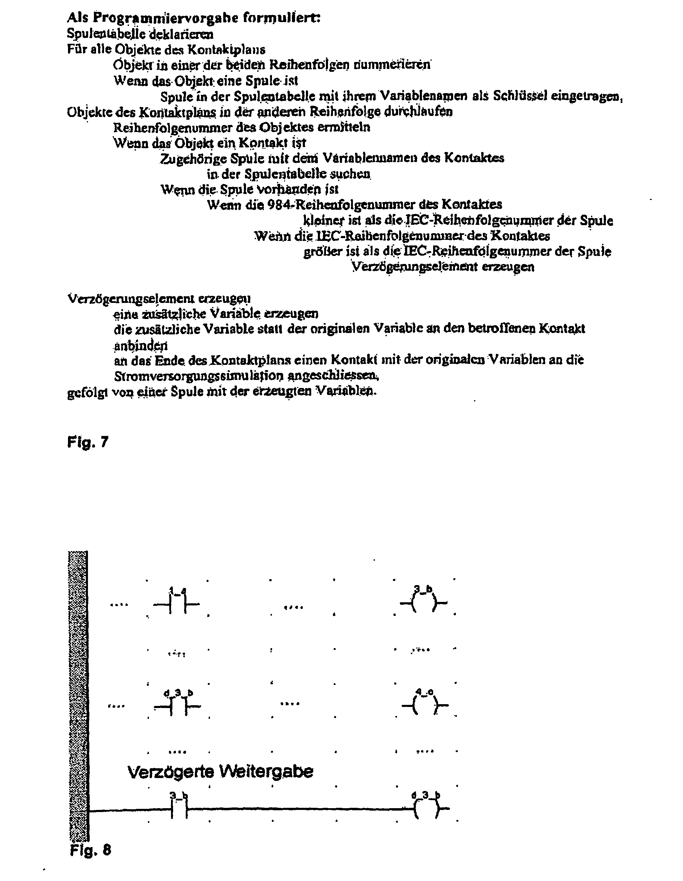

In Fig. 7 ist schematisch ein Ablaufplan des Verfahrens dargestellt. Zunächst wird eine Spulentabelle deklariert. Für alle Objekte des Kontaktplans **KOP1** werden Objekte in einer der beiden Reihenfolgen nummeriert. Wenn das Objekt eine Spule **S14**, **S32** ist, wird die Spule **S14**, **S32** in der Spulentabelle mit ihrem Variablennamen **V14**, **V32** als Schlüssel eingetragen.

Objekte des Kontaktplans **KOP1** werden in der anderen Reihenfolge durchlaufen, wobei die Reihenfolgen-Nummer des Objekts ermittelt wird. Wenn das Objekt ein Kontakt **K21**, **K51** ist, wird die zugehörige Spule **S14**, **S32** mit dem Variablennamen des Kontakts **K21**, **K51** mit der Spulentabelle gesucht. Ist die Spule **S14**, **S32** vorhanden, d. h. die 984-Reihenfolgen Nummer **RFN-984** des Kontaktes **K21**, **K51** ist kleiner als die IEC-Reihenfolgen-Nummer **RFN-IEC** der Spule **S14**, **S52** oder die IEC-Reihenfolge-Nummer des Kontaktes **K21**, **K51** ist großer als die IEC-Reihenfolgen-Nummer **RFN-IEC** der Spule, dann wird ein Verzögemngselement VZE erzeugt.

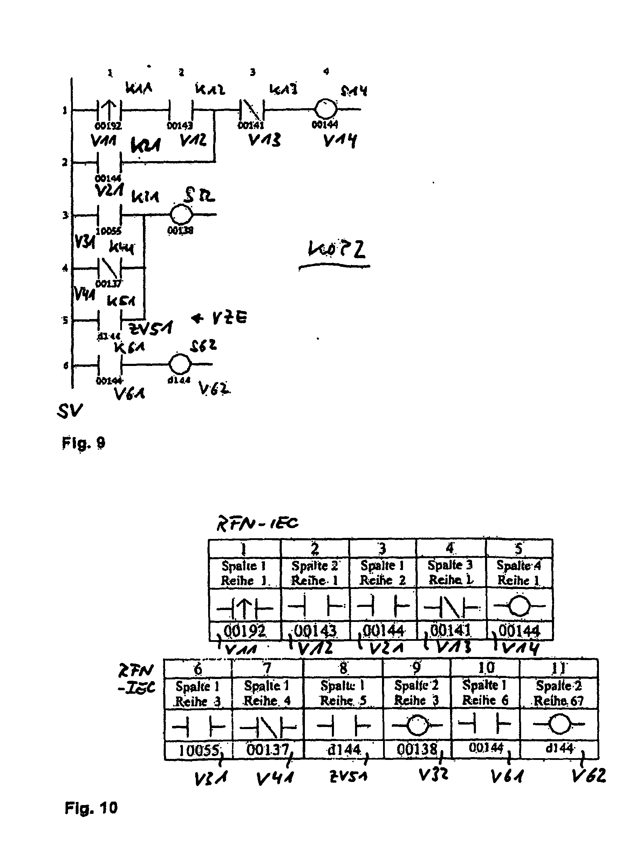

Die Erzeugung des Verzögerungselementes VZE umfasst gemäß Fig. 8 und 9 die Erzeugung einer zusätzlichen Variablen **ZV51**, wobei die zusätzliche Variable **ZV51** anstatt der originalen Variablen **V51** an den betroffenen Kontakt K51 angebunden wird. An das Ende des Kontaktplans **KOP2** wird ein Kontakt **K61** mit einer **Variablen V61**, die der originalen Variablen **V51** entspricht, an die Stromversorgungssimulation **SV**, wie beispielsweise in Fig. 9 dargestellt, angeschlossen, gefolgt von einer Spule **S62** mit einer Variablen **V62**, die der erzeugten Variablen **ZV51** entspricht.

Für das hier beschriebene Beispiel ergibt sich somit der in Fig. 9 dargestellt Kontaktplan, **KOP2**, wobei die zusätzlich erzeugte Variable **ZV5**1, **V62** mit "d144" bezeichnet ist.

Die Ausführungsreihenfolge ist in Fig. 10 dargestellt. Damit wird der neue Wert "d114" der selbsthaltenden Spule **S41** in Spalte 4, Reihe 1 in der Folgeverarbeitung erst nach deren Ausführung bekannt, und es ergibt sich das gleiche Gesamtverhalten wie für den originalen 984-Kontaktplan.

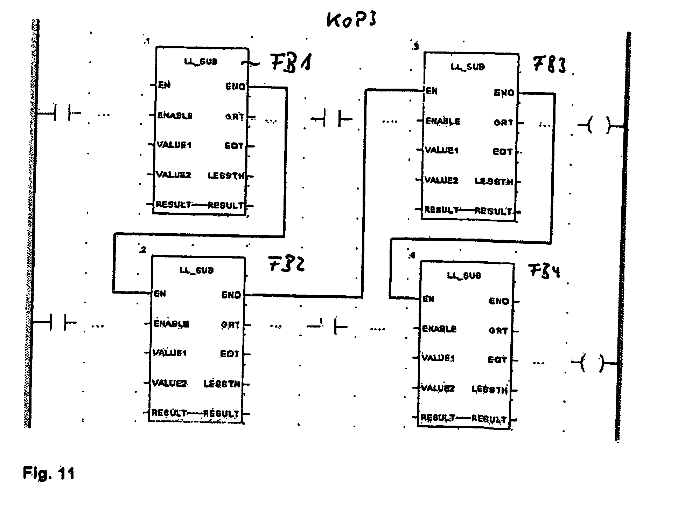

Fig. 11 zeigt einen Kontaktplan **KOP3** mit Funktionsblöcken **FBi...FB4**. Die Funktionsblöcke **FB1 ... FB4** eines Kontaktplanes werden mit Hilfe der EN-Eingänge und ENO-Ausgänge, wie sie nach IEC 61131 zusätzlich an Bausteinen ergänzt werden müssen, in der Reihenfolge der 984-Ausführung verbunden, da Bausteine vertikal aufeinander folgen können und nicht durch Kontakte und vertikale Verbindungen miteinander verbunden sein müssen. Die Verbindung durch EN/ENO erzwingt nach IEC 61131 die gewünschte Ausführungsreihenfolge auch für Bausteine. Die Verbindungen können auch als Konnektoren im Sinne der Norm IEC61131 ausgeführt werden, um das Logikbild nicht zu stören.

Auf diese Weise steht nach der Ausführung des Kontaktplanes in einer IEC 61131-Steuerung das gleiche Ergebnis zur Verfügung wie in der traditionellen 984-Steuerung.

## Patentansprüche

1. Verfahren zur Umwandlung von traditionellen, spaltenweise gelesenen und ausgeführten Kontaktplänen (KOP1) für speicherprogrammierbare Steuerungen nach beispielsweise 984 - Modell in Datenfluss - orientiert gelesene und ausgeführte Kontaktpläne (KOP2) für beispielsweise IEC 61131 - orientierte Steuerungen,
**dadurch gekennzeichnet,**
**dass** in den traditionell spaltenweise gelesenen und ausgeführten Kontaktplänen (KOP1) ermittelt wird, ob innerhalb des Netzwerkes Variablen (V21, V51, V 14) sowohl an Spulen (S 14) als auch an Kontakten (K21, K51) vorkommen,
**dass** ermittelt wird, ob der Kontakt (K21, K51) nach dem 984-Modell vor der zugeordneten Spule (S 14) und nach dem IEC-Modell nach der zugeordneten Spule (S14) verarbeitet wird,
**dass** bejahendenfalls für jede solche Variable (V21, V51, V14) eine zusätzliche Variable (ZV51) erzeugt und die zusätzliche Variable (ZV51) statt der originalen Variablen (V51) in den betroffenen Kontakt (K51) eingetragen wird und
**dass** weiterhin an das Ende des Netzwerkes ein Kontakt (K61) mit einer Variablen (V61), die dem Wert der originalen Variablen (V51) entspricht, an eine Stromversorgungssimulation (SV) angeschlossen wird, gefolgt von einer Spule (S62) mit einer Variablen (V62), die dem Wert der erzeugten Variablen (VZ51) entspricht.

2. Verfahren nach Anspruch 1,
**dadurch gekennzeichnet,**
**dass** Funktionsblöcke (FB1...FB4) eines Kontaktplans (KOP) mit Hilfe von EN-Eingängen und ENO-Ausgängea gemäß IEC 61131 orientierter Steuerungen in der Reihenfolge der 984-Modellausführung verbunden werden.

## Claims

1. A method for the conversion of traditional ladder diagrams (KOP1) - read and executed column by column - for programmable logic controllers, for example in accordance with the 984 model, into ladder diagrams (KOP2) read and executed in a data-flow-oriented manner for, for example, IEC 61131-oriented controllers,
**characterized in**
**that** in the traditional ladder diagrams (KOP1), read and executed column by column, it is determined whether within the network variables (V21, V51, V14) occur on both coils (S 14) and contacts (K21, K51),
**that** it is determined, whether the contact (K21, K51) according to the 984 model is processed before the associated coil (S 14) and according to the IEC model is processed after the associated coil (S 14),
**that** in the affirmative case for each such variable (V21, V51, V14) one additional variable (ZV51) is generated and this additional variable is recorded in the respective contact (K51) instead of the original variable (V51), and
**that** furthermore a contact (K61) with a variable (V61) corresponding to the value of the original variable (V51) is connected to the power supply simulation (SV) at the end of the network, followed by a coil (S62) with a variable (V62) corresponding to the value of the generated variable (VZ51).

2. Method of claim 1,
**characterized in**
**that** the functional blocks (FB1 ... FB4) of a ladder diagram (KOP) are connected with the help of EN inputs and ENO outputs in conformity with IEC 61131-oriented controllers, in the order of processing of the 984 model.

## Revendications

1. Procédé de transformation de plans de contacts (KOP1) classiques, lus et réalisés par colonnes, pour des commandes programmables, par exemple selon le modèle 984, en plans de contacts (KOP2) lus et réalisés par colonnes, et orientés flux de données, par exemple pour des commandes orientées sur la norme CEI 61131,
**caractérisé en ce**
**qu'**est déterminé, dans les plans de contacts (KOP1) classiques lus et réalisés par colonnes, si des variables (V21, V51, V14) apparaissent aussi bien au niveau des bobines (S14) que des contacts (K21, K51) au sein du réseau,
**qu'**est déterminé, si le contact (K21, K51) est traité selon le modèle 984 avant la bobine associée (S14) et selon le modèle CEI après la bobine associée (S14),
**que**, dans l'affirmative, une variable supplémentaire (ZV51) est générée pour chaque variable (V21, V51, V14) de ce type et que cette variable supplémentaire (ZV51) est inscrite dans le contact concerné (K51) à la place de la variable originale (V51), et
**qu'**en outre, à l'extrémité du réseau, un contact (K61) avec une variable (V61) correspondant à la valeur de la variable originale (V51) est connecté à un dispositif de simulation d'alimentation en courant (SV), suivi par une bobine (S62) avec une variable (V62) correspondant à la valeur de la variable générée (VZ51).

2. Procédé selon la revendication 1,
**caractérisé en ce**
**que** des blocs de fonction (FB1...FB4) d'un plan de contacts (KOP) sont reliés à l'aide d'entrées EN et de sorties ENO selon les commandes orientées sur la norme CEI 61131 dans l'ordre de réalisation du modèle 984.
